# FASCICULE DE BREVET EUROPEEN

(11) **EP 4 614 631 B1**
(45) Date de publication et mention de la délivrance du brevet: **04.11.2026**
(21) Numéro de dépôt: 25156920.8
(22) Date de dépôt: 10.02.2025
(51) Int. Cl.: H01M 8/0254, H01M 8/0258, H01M 8/0267, C25B 9/75, C25B 1/04

(54) **PLAQUE BIPOLAIRE DE CELLULE ELECTROCHIMIQUE PERMETTANT UNE REDUCTION DES ECOULEMENTS DE COURT-CIRCUIT EN BORDURE DE LA ZONE REACTIONNELLE**
BIPOLARPLATTE EINER ELEKTROCHEMISCHEN ZELLE ZUR REDUZIERUNG VON KURZSCHLUSSSTRÖMEN AM RAND DES REAKTIONSBEREICHS
BIPOLAR PLATE FOR AN ELECTROCHEMICAL CELL ALLOWING A REDUCTION OF SHORT-CIRCUIT FLOWS AT THE EDGE OF THE REACTION ZONE

(30) Priorité: 14.02.2024 FR 2401457
(43) Date de publication de la demande: 10.09.2025
(73) Titulaire: Commissariat à l'Energie Atomique et aux Energies Alternatives, 75015 Paris (FR)
(72) Inventeur: POIROT-CROUVEZIER, Jean-Philippe, 38054 GRENOBLE CEDEX 09 (FR)
(74) Mandataire: Santarelli

(56) Documents cités:
- EP-A1- 3 171 439
- US-A1- 2021 408 559

## Description

### DOMAINE TECHNIQUE

Le domaine de l'invention est celui des réacteurs électrochimiques comportant un empilement de cellules électrochimiques, telles que les piles à combustible et les électrolyseurs, et concerne plus particulièrement les plaques bipolaires à tôles conductrices.

### ÉTAT DE LA TECHNIQUE ANTÉRIEURE

Un réacteur électrochimique, tel qu'une pile à combustible ou un électrolyseur, comporte habituellement un empilement de cellules électrochimiques dont chacune comprend une anode et une cathode séparées électriquement l'une de l'autre par un électrolyte. Les cellules sont le lieu d'une réaction électrochimique entre deux fluides réactifs introduits de manière continue.

D'une manière générale, dans le cas d'une pile à combustible, le fluide combustible (par exemple l'hydrogène) est apporté à l'anode, alors que le fluide comburant (par exemple de l'air) est amené à la cathode. La réaction électrochimique est subdivisée en deux demi-réactions, une réaction d'oxydation et une réaction de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte par exemple contenu dans une membrane polymère, et un conducteur électronique formé par le circuit électrique externe. L'empilement de cellules est ainsi le lieu de la réaction électrochimique : les fluides réactifs doivent y être apportés, les produits et les espèces non réactives doivent en être évacués, tout comme la chaleur produite lors de la réaction.

Les cellules électrochimiques sont habituellement séparées les unes des autres par des plaques bipolaires qui assurent l'interconnexion électrique entre elles et l'écoulement des fluides réactifs. Les plaques bipolaires comportent une face anodique au niveau de laquelle est formé un circuit de distribution du fluide combustible, et une face cathodique opposée au niveau de laquelle est formé un circuit de distribution du fluide comburant. Chaque circuit de distribution prend la forme d'un réseau de canaux agencés pour amener le fluide réactif à l'électrode correspondante. Les plaques bipolaires peuvent également comporter un circuit de refroidissement formé d'un réseau de conduits internes qui assurent l'écoulement d'un fluide caloporteur permettant d'évacuer la chaleur produite localement lors de la réaction électrochimique par la cellule.

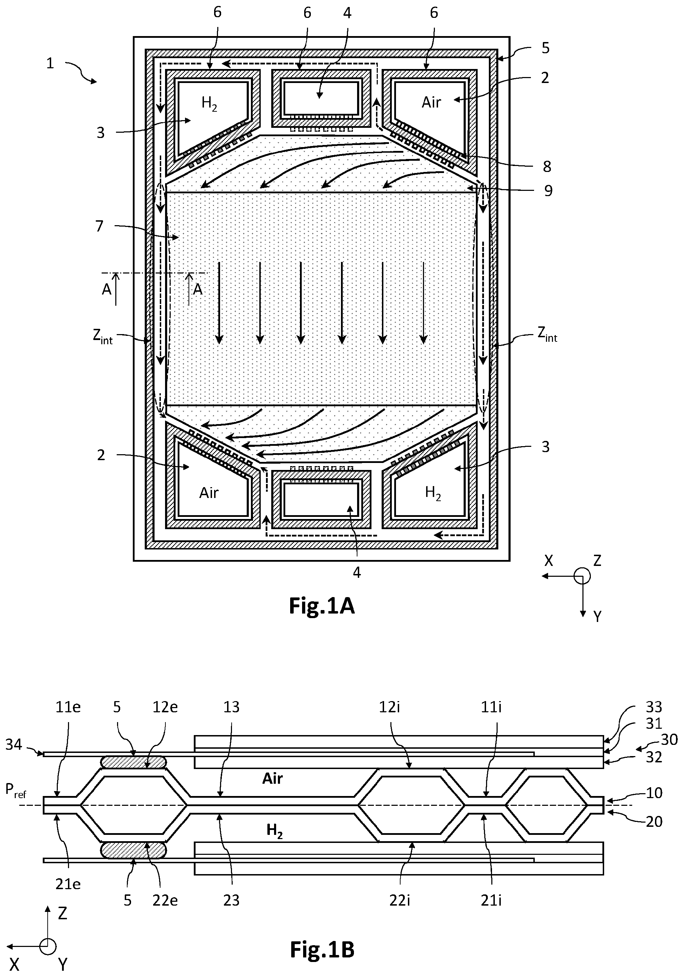

La figure 1A est une vue schématique et partielle d'un exemple de plaque bipolaire 1, de type à tôles conductrices, en vue de dessus et du côté cathodique. La figure 1B est une vue en coupe transversale de la plaque bipolaire 1 de la fig.1A suivant la ligne de coupe A-A.

La plaque bipolaire 1 comporte deux tôles supérieure 10 et inférieure 20, réalisées en un matériau électriquement conducteur, et superposées l'une à l'autre. Les tôles 10, 20 comportent chacune un circuit de distribution 7 adapté à acheminer un fluide réactif jusqu'à l'électrode correspondante. Les circuits de distribution anodique et cathodique 7 sont superposés l'un à l'autre, et définissent, dans le plan XY, la zone réactionnelle de la cellule électrochimique. Un collecteur d'air 2 et un collecteur d'hydrogène 3 sont situés en regard d'un même côté du circuit de distribution 7, et sont ici séparés l'un de l'autre par un collecteur de liquide caloporteur 4. Le collecteur d'air 2 est adapté à approvisionner le circuit de distribution 7 en air, via ici une zone d'injection 8 puis une zone d'homogénéisation 9.

Les tôles 10, 20 comportent une ligne d'étanchéité externe, formée de nervures longitudinales externes supérieure 12e et inférieure 22e, superposées l'une à l'autre, associées chacune à un joint d'étanchéité 5 dit externe (supérieur et inférieur). La ligne d'étanchéité externe s'étend continûment à la périphérie de la plaque bipolaire 1, et entoure dans le plan XY les collecteurs 2 et 3 (et ici également le collecteur 4) et la zone réactionnelle 7. Elle permet d'éviter que les fluides réactifs ne s'écoulent à l'extérieur de la plaque bipolaire. Par ailleurs, les tôles 10, 20 comportent des nervures longitudinales internes supérieure 12i et inférieure 21i, qui s'étendent longitudinalement en bordure des circuits de distribution, et participent à délimiter un canal de distribution. Les nervures longitudinales externes 12e, 22e (également appelées nervures de joint) et les nervures longitudinales internes 12i, 22i (également appelées nervures de canal) délimitent longitudinalement une zone longitudinale intermédiaire Zᵢₙₜ située en bordure du circuit de distribution.

Ainsi, en fonctionnement, l'air est approvisionné par le collecteur d'entrée 2, s'écoule au travers de la zone d'injection 8 puis de la zone d'homogénéisation 9, et vient au contact de la cathode 32 au moyen du circuit de distribution 7. L'air non consommé s'écoule ensuite au travers d'une zone d'homogénéisation de sortie puis d'une zone d'injection de sortie, pour enfin rejoindre le collecteur de sortie d'air 2 (cf. flèches en trait continu sur la fig.1A). Il en est de même pour l'hydrogène du côté anodique.

Il apparaît toutefois que de l'air peut contourner la zone réactionnelle en s'écoulant dans des zones longitudinales intermédiaires Zᵢₙₜ situées entre le circuit de distribution 7 et la ligne d'étanchéité externe. En effet, comme le montrent les flèches en trait pointillé sur la fig.1A, l'air peut s'échapper de la zone d'injection 8 pour rejoindre les zones longitudinales intermédiaires Zᵢₙₜ et s'écouler le long des bordures longitudinales de la zone réactionnelle. Ces écoulements sont des écoulements de court-circuit dans la mesure où ils ne participent pas à la réaction électrochimique, ce qui dégrade les performances de la pile à combustible. C'est le cas pour l'air au niveau du côté cathodique, mais également de l'hydrogène au niveau du côté anodique.

Il existe donc un besoin de disposer de plaques bipolaires dont la configuration structurelle des tôles conductrices permet de réduire ces écoulements dans ces zones longitudinales intermédiaires, tant pour les fluides réactifs que pour le liquide caloporteur.

A ce titre, le document EP3171439 A1 décrit une configuration structurelle des tôles conductrices dans les zones longitudinales intermédiaires, où les tôles conductrices comportent des nervures transversales intermédiaires inférieure et supérieure superposées l'une à l'autre, qui raccordent chacune directement la nervure longitudinale interne à la nervure longitudinale externe. Les nervures transversales intermédiaires sont déformables, de sorte qu'en se déformant, elles s'étendent verticalement en direction du film étanche (cf. film 34 sur la fig.1B), entre l'AME et le joint externe, et épousent au mieux la forme de l'AME. Ainsi, la section droite d'écoulement des fluides réactifs, dans cette zone longitudinale intermédiaire, est réduite, ce qui limite l'écoulement de court-circuit des fluides réactifs. Cependant, la section droite d'écoulement du liquide caloporteur y est augmentée, ce qui réduit l'efficacité de refroidissement et dégrade les performances de la cellule électrochimique.

### EXPOSÉ DE L'INVENTION

L'invention a pour objectif de remédier au moins en partie aux inconvénients de l'art antérieur, et plus particulièrement de proposer une plaque bipolaire de cellule électrochimique dont la configuration structurelle des tôles conductrices, dans au moins l'une des zones longitudinales intermédiaires, permet de réduire à la fois l'écoulement de court-circuit des fluides réactifs et celui du liquide caloporteur, tout en permettant de limiter les risques de déformation mécanique des tôles conductrices et/ou des assemblages membrane/électrodes dans la zone longitudinale intermédiaire.

Pour cela, l'objet de l'invention est une plaque bipolaire de cellule électrochimique, comportant : des tôles supérieure et inférieure, superposées l'une à l'autre, comportant :
∘ des circuits de distribution supérieur et inférieur, superposés l'un à l'autre, adaptés à amener des fluides réactifs respectivement jusqu'à des électrodes supérieure et inférieure ;
∘ des nervures longitudinales internes supérieure et inférieure, superposées l'une à l'autre, formant respectivement une bordure longitudinale des circuits de distribution supérieur et inférieur ;
∘ des nervures longitudinales externes supérieure et inférieure, superposées l'une à l'autre, s'étendant le long des nervures longitudinales internes, délimitant latéralement, avec ces dernières, une zone longitudinale intermédiaire.

De plus, dans la zone longitudinale intermédiaire se trouve une alternance longitudinale entre au moins une première région anti-court-circuit et au moins une deuxième région anti-court-circuit, où :
∘ dans la première région anti-court-circuit dite à plan de contact supérieur, la tôle supérieure présente une nervure longitudinale intermédiaire supérieure s'étendant dans toute la première région anti-court-circuit ; et la tôle inférieure présente un renfoncement intermédiaire inférieur superposé et au contact de la nervure longitudinale intermédiaire supérieure ;
∘ dans la deuxième région anti-court-circuit dite à plan de contact inférieur, la tôle inférieure présentant une nervure longitudinale intermédiaire inférieure, s'étendant dans toute la deuxième région anti-court-circuit ; et la tôle supérieure présente un renfoncement intermédiaire supérieur, superposé et au contact de la nervure longitudinale intermédiaire inférieure.

Selon l'invention, dans la première région anti-court-circuit, la tôle inférieure présente :
∘ une pluralité de plots inférieurs, faisant saillie, suivant une direction opposée à la tôle supérieure, vis-à-vis du renfoncement intermédiaire inférieur dans lesquels ils sont situés, et présentant des dimensions sensiblement égales suivant deux axes orthogonaux quelconques dans un plan parallèle à la plaque bipolaire ;
∘ une absence de nervures transversales s'étendant dans la zone longitudinale intermédiaire en joignant les nervures longitudinales inférieures interne et externe.

De plus, dans la deuxième région anti-court-circuit, la tôle supérieure présente :
∘ une pluralité de plots supérieurs, faisant saillie, suivant une direction opposée à la tôle inférieure, vis-à-vis du renfoncement intermédiaire supérieur dans lesquels ils sont situés, et présentant des dimensions sensiblement égales suivant deux axes orthogonaux quelconques dans un plan parallèle à la plaque bipolaire ;
∘ une absence de nervures transversales s'étendant dans la zone longitudinale intermédiaire en joignant les nervures longitudinales supérieures interne et externe.

Certains aspects préférés mais non limitatifs de cette plaque bipolaire sont les suivants.

La plaque bipolaire peut comporter plusieurs premières régions anti-court-circuit agencées en alternance longitudinale avec plusieurs deuxièmes régions anti-court-circuit.

Les plots supérieurs peuvent être agencés longitudinalement de manière périodique, et les plots inférieurs peuvent être agencés longitudinalement de manière périodique.

Les plots supérieurs et inférieurs peuvent être répartis sur au moins deux lignes parallèles à un axe longitudinal de la zone longitudinale intermédiaire.

Les plots supérieurs et inférieurs peuvent présenter une hauteur sensiblement égale, respectivement, à celle des nervures longitudinales internes supérieure et inférieure.

Les plots supérieurs et inférieurs peuvent présenter une base circulaire ou carrée.

Les plots supérieurs et inférieurs peuvent être distincts respectivement, des nervures longitudinales internes supérieure et inférieure, et, respectivement, des nervures longitudinales externes supérieure et inférieure.

Les nervures longitudinales externes supérieure et inférieure peuvent être au contact chacune d'un joint d'étanchéité.

L'invention porte également sur une cellule électrochimique, comportant au moins la plaque bipolaire selon l'une quelconque des caractéristiques précédentes, et des assemblages membrane / électrodes, l'un au contact de la tôle supérieure et l'autre au contact de la tôle inférieure.

Un assemblage membrane / électrode supérieur peut être au contact des plots supérieurs, et un assemblage membrane / électrode inférieur peut être au contact des plots inférieurs.

L'invention porte également sur un réacteur électrochimique, comportant au moins une cellule électrochimique selon les caractéristiques précédentes.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1A, déjà décrite, est une vue de dessus, schématique et partielle, d'une plaque bipolaire selon un exemple de l'art antérieur ;
la figure 1B, déjà décrite, est une vue schématique et partielle, en coupe transversale, de la plaque bipolaire de la fig.1A, selon la ligne de coupe A-A ;
la figure 2 est une vue de dessus, schématique et partielle, d'une plaque bipolaire selon un mode de réalisation, illustrant les premières et deuxièmes régions anti-court-circuit situées dans les zones longitudinales intermédiaires ;
la figure 3A est une vue en perspective, schématique et partielle, d'une partie de plaque bipolaire selon un mode de réalisation, illustrant une alternance longitudinale de premières et deuxièmes régions anti-court-circuit dans une zone longitudinale intermédiaire (la zone réactionnelle n'est pas illustrée) ;
la figure 3B est une vue schématique et partielle, en coupe longitudinale dans la zone longitudinale intermédiaire, de la plaque bipolaire de la fig.3A ;
la figure 4A est une vue schématique et partielle, en perspective et en coupe transversale dans une région anti court-circuit à plan de contact inférieur, de la plaque bipolaire de la fig.3A ;
la figure 4B est une vue schématique et partielle, en coupe transversale dans une région anti court-circuit à plan de contact inférieur, de la plaque bipolaire de la fig.4A, où sont également illustrés les assemblages membrane/électrode supérieur et inférieur ;
la figure 5A est une vue schématique et partielle, en perspective et en coupe transversale dans une région anti court-circuit à plan de contact supérieur, de la plaque bipolaire de la fig.3A ;
la figure 5B est une vue schématique et partielle, en coupe transversale dans une région anti court-circuit à plan de contact supérieur, de la plaque bipolaire de la fig.5A, où sont également illustrés les assemblages membrane/électrode supérieur et inférieur.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur une plaque bipolaire de cellule électrochimique pour des réacteurs électrochimiques tels que des piles à combustible et des électrolyseurs. La plaque bipolaire est de type à tôles conductrices, lesquelles comportent des nervures et des renfoncements. L'invention porte plus précisément sur une configuration structurelle particulière de la plaque bipolaire dans au moins l'une des zones longitudinales intermédiaires qui s'étendent longitudinalement entre la ligne d'étanchéité externe et le circuit de distribution. Cette configuration structurelle des tôles conductrices permet de réduire l'écoulement de court-circuit des fluides réactifs ainsi que celui du liquide caloporteur, tout en permettant de limiter les risques de déformation de l'AME ou des tôles conductrices dans la zone longitudinale intermédiaire.

On décrira différents modes de réalisation et variantes en référence à une pile à combustible, et en particulier à une pile à combustible de type PEM (pour *Proton Exchange Membrane,* en anglais) dont la cathode est alimentée en oxygène et l'anode en hydrogène. L'invention s'applique cependant à tout type de pile à combustible, en particulier à celles fonctionnant à basse température, c'est-à-dire à une température inférieure à 200°C, ainsi qu'aux électrolyseurs électrochimiques.

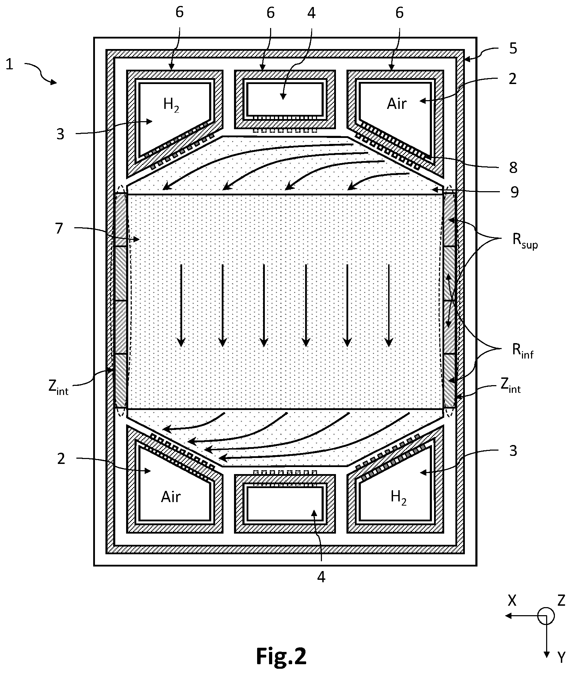

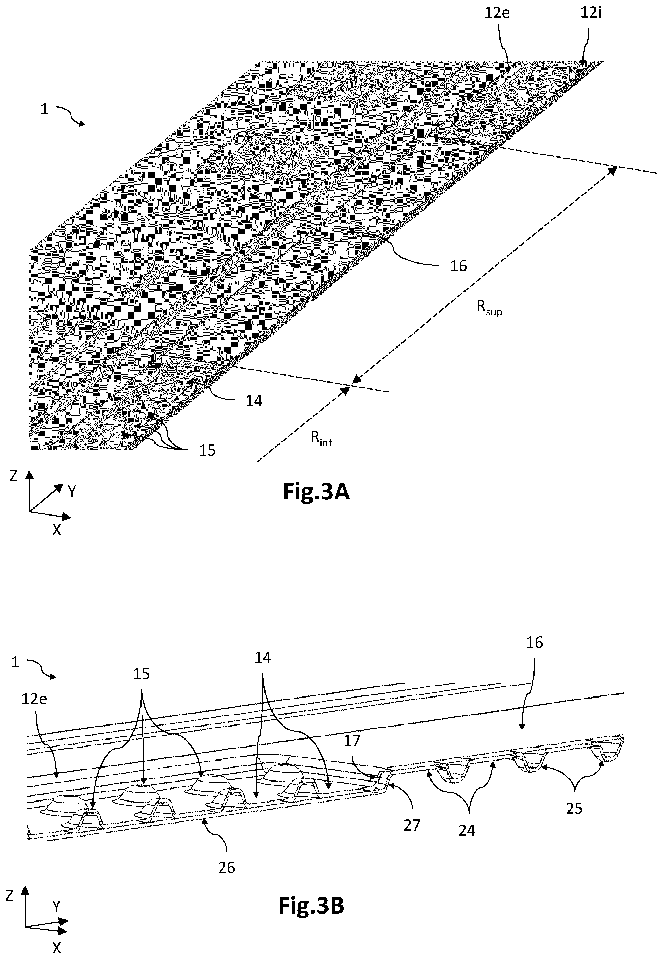

La figure 2 est une vue de dessus, schématique et partielle, d'une partie de la plaque bipolaire 1 selon un mode de réalisation. Certains éléments sont décrits en référence à la fig.1B. La figure 3A est une vue en perspective d'une partie d'une plaque bipolaire similaire à celle de la fig.2 (où la zone réactionnelle n'est pas illustrée), et la figure 3B est une vue en perspective et en coupe longitudinale de la plaque bipolaire 1 de la fig.3A.

On définit ici et pour la suite de la description un repère orthogonal direct XYZ, où l'axe Z est orienté suivant l'épaisseur de la plaque bipolaire 1 (de la tôle inférieure 20 vers la tôle supérieure 10), et où les axes X et Y définissent un plan principal suivant lequel s'étend la plaque bipolaire.

Les cellules électrochimiques appartiennent ici à un empilement de cellules d'une pile à combustible. Chaque cellule électrochimique comporte un assemblage membrane/électrodes 30 (AME, cf. fig.1B) formé d'une cathode 32 et d'une anode 33 séparées l'une de l'autre par un électrolyte 31 comprenant ici une membrane polymère. Les AME 30 des cellules électrochimiques sont disposés entre des plaques bipolaires 1 adaptées à amener des espèces réactives aux électrodes et à évacuer la chaleur produite lors de la réaction électrochimique. L'AME s'étend ici en partie dans la zone longitudinale intermédiaire suivant l'axe X. Un film étanche 34 (matériau distinct de la membrane 31 ou film correspondant à la membrane elle-même) peut s'étendre à partir de l'AME 30 jusqu'en bordure des plaques bipolaires 1 et être au contact des joints d'étanchéité externes 5.

Chaque plaque bipolaire 1 est formée de deux tôles supérieure 10 et inférieure 20, superposées et assemblées l'une à l'autre. Elles sont réalisées en un matériau électriquement conducteur. Ces tôles conductrices 10, 20 sont déformées localement de manière à former des canaux d'écoulement des fluides réactifs, et en particulier une zone d'injection 8, une zone d'homogénéisation 9 et un circuit de distribution 7, ainsi qu'un circuit de refroidissement situé entre les tôles conductrices 10, 20. Ainsi, la tôle inférieure 20, par exemple anodique, est destinée à être au contact de l'anode de l'assemblage membrane/électrodes 30 d'une cellule électrochimique adjacente, alors que la tôle supérieure 10, ici cathodique, est destinée à être au contact de la cathode 32 de l'AME de la cellule électrochimique.

Chaque tôle conductrice 10, 20 comporte une face externe et une face interne opposée, les tôles conductrices 10, 20 se faisant face au niveau des faces internes. Une face externe est dite anodique lorsqu'elle est destinée à être au contact de l'anode 33, ou est dite cathodique lorsqu'elle est destinée à être au contact de la cathode 32. La face anodique d'une tôle conductrice comporte le circuit de distribution d'un fluide réactif combustible, par exemple ici de l'hydrogène, et la face cathodique de l'autre tôle conductrice comporte le circuit de distribution du fluide réactif comburant, par exemple ici de l'air.

Les tôles conductrices 10, 20 se présentent sous forme de feuilles, ou de plaques élémentaires de faible épaisseur, réalisées en un matériau électriquement conducteur, par exemple un métal voire un matériau composite par exemple chargé en graphite. L'épaisseur peut être de l'ordre de quelques dizaines de microns à quelques centaines de microns, par exemple de 50µm à 200µm environ dans le cas de tôles métalliques.

Chaque tôle conductrice 10, 20 comporte des nervures et des renfoncements, obtenus par exemple par emboutissage, estampage, ou tout autre technique de mise en forme, dont la forme sur une face est le complémentaire de la forme sur la face opposée. Les nervures permettent notamment de définir le circuit de distribution d'un fluide réactif au niveau de la face externe, ainsi que le circuit de refroidissement du fluide caloporteur au niveau de la face interne.

Des collecteurs 2, 3, 4 sont des ouvertures qui traversent chacune des plaques bipolaires 1. Les collecteurs des fluides réactifs 2, 3 sont situés de part et d'autre de la zone réactionnelle, suivant un axe principal d'écoulement des fluides réactifs, ici suivant l'axe Y. Dans cet exemple, un collecteur du liquide caloporteur 4 est situé entre les collecteurs des fluides réactifs 2, 3. En variante, ils peuvent être situés suivant un axe X orthogonal à l'axe longitudinal Y.

Les collecteurs des fluides réactifs 2, 3 sont adjacents les uns aux autres (séparés ou non par le collecteur du liquide caloporteur 4), et sont disposés en regard d'une même ouverture (entrée ou sortie) de la zone réactionnelle. Dans cet exemple, un collecteur d'entrée d'air 2 et un collecteur d'hydrogène 3 (entrée ou sortie) sont situés en regard de l'entrée du circuit de distribution cathodique 7.

Les tôles conductrices 10, 20 comportent des zones d'injection 8 pour autoriser la circulation des fluides à partir ou vers les collecteurs. Ainsi, une zone d'injection d'air 8 assure le raccord fluidique entre le collecteur d'air 2 et la zone d'homogénéisation 9. Elle est formée de conduits qui traversent la ligne d'étanchéité du collecteur d'air et débouchent sur la face externe de la tôle supérieure 10, pour permettre à l'air de s'écouler en direction de la zone d'homogénéisation 9. Il en est de même pour la tôle inférieure 20, dont la zone d'injection communique avec le collecteur d'hydrogène 3 et la zone d'homogénéisation. La zone d'injection du liquide caloporteur est formée de conduits qui débouchent entre les deux tôles conductrices cathodique 10 et anodique 20. Des zones d'injection similaires sont décrites notamment dans le document EP3136492A1.

Chaque tôle conductrice 10, 20 comporte ici une zone d'homogénéisation 9 qui communique avec la zone d'injection 8 d'une part, et avec le circuit de distribution 7 d'autre part. Une telle zone d'homogénéisation 9 permet d'homogénéiser l'écoulement d'air à l'entrée du circuit de distribution 7. Elle peut être formée par des conduits d'homogénéisation réalisés dans la tôle conductrice 10. Le document EP3136492A1 décrit également un exemple d'une telle zone d'homogénéisation.

Chaque tôle conductrice 10, 20 comporte un circuit de distribution 7, formé de canaux qui s'étendent entre une entrée et une sortie alignées suivant une direction principale (ici l'axe Y). Ces canaux sont séparés deux à deux par une nervure de séparation qui est au contact de l'AME correspondante. Les circuits de distribution cathodique et anodique définissent dans le plan XY la zone réactionnelle de la cellule électrochimique.

Par ailleurs, on définit un plan de référence P_{ref} de la plaque bipolaire 1 comme étant le plan de contact des tôles conductrices 10, 20 au niveau de leurs bordures externes 11e et 21e (cf. fig.1B). Il s'agit du plan de référence P_{ref} vis-à-vis duquel les nervures et les renfoncements sont définis, lorsqu'on les considère à partir de la face externe de chaque tôle conductrice 10, 20.

Ainsi, une nervure est obtenue par déformation locale de la tôle conductrice 10, 20, de sa face interne vers sa face externe. Il s'agit donc d'un relief ou d'un bossage de la tôle conductrice 10, 20, vu à partir de la face externe, qui s'éloigne du plan de référence P_{ref} suivant l'axe Z (et donc qui s'éloigne de l'autre tôle conductrice). Autrement dit, une nervure est une surface saillante par rapport au plan de référence P_{ref}. Ainsi, une nervure supérieure est une nervure de la tôle supérieure 10 qui s'éloigne du plan de référence P_{ref} suivant la direction +Z. Et une nervure inférieure est une nervure de la tôle inférieure 20 qui s'éloigne du plan de référence P_{ref} suivant la direction -Z. Par ailleurs, une nervure présente une forme allongée dans le plan XY : une dimension (longueur) suivant un axe longitudinal est supérieure à sa dimension (largeur) suivant un axe transversal.

Par ailleurs, on appelle nervure longitudinale intermédiaire une nervure située dans la zone longitudinale intermédiaire Zᵢₙₜ (donc située entre les nervures longitudinales interne et externe) et qui s'étend longitudinalement suivant le même axe longitudinal Y que celui de la zone longitudinale intermédiaire. De plus, on appelle nervure transversale intermédiaire une nervure située dans la zone longitudinale intermédiaire Zᵢₙₜ et qui s'étend longitudinalement suivant un axe incliné (dans le plan XY), voire orthogonal, à l'axe longitudinal Y de la zone longitudinale intermédiaire Zᵢₙₜ.

A l'inverse, un renfoncement est obtenu par déformation locale de la tôle conductrice 10, 20, de sa face externe vers sa face interne. Il s'agit donc d'une dépression ou d'un creux de la tôle conductrice 10, 20, vu à partir de sa face externe, qui s'étend en deçà du plan de référence P_{ref} suivant l'axe Z (et donc qui se rapproche de l'autre tôle conductrice). Ainsi, un renfoncement supérieur est un renfoncement de la tôle supérieure 10 qui va au-delà du plan de référence P_{ref} suivant la direction -Z. Et un renfoncement inférieur est un renfoncement de la tôle inférieure 20 qui va au-delà du plan de référence P_{ref} suivant la direction +Z.

Comme illustré sur la fig.1B, la plaque bipolaire 1 comporte des nervures longitudinales externes, supérieure 12e et inférieure 22e, superposées l'une à l'autre, qui entourent entièrement dans le plan XY les collecteurs 2 et 3 ainsi que la zone réactionnelle 7. Elles s'étendent longitudinalement en bordure de la plaque bipolaire 1. Des joints étanches 5, dit externes, sont disposés respectivement au contact des nervures longitudinales externes supérieure 12e et inférieure 22e. Ils sont également au contact du film étanche 34. Cette configuration, qui forme une ligne d'étanchéité externe, permet d'éviter que les fluides, en particulier les gaz réactifs, ne s'écoulent en dehors de la plaque bipolaire 1.

Par ailleurs, la plaque bipolaire 1 comporte des nervures longitudinales internes, supérieure 12i et inférieure 22i, superposées l'une à l'autre, qui s'étendent longitudinalement en bordure de la zone réactionnelle. Elles forment les nervures de bordure des circuits de distribution 7. Elles sont au contact de la couche de diffusion de l'électrode de l'AME 30. Ainsi, la zone longitudinale intermédiaire Zᵢₙₜ correspond à la zone délimitée latéralement (ici suivant l'axe X) par la ligne d'étanchéité externe et par la zone réactionnelle, et plus précisément par les nervures longitudinales externes 12e, 22e d'une part, et par les nervures longitudinales internes 12i, 22i d'autre part. Son axe longitudinal est ici l'axe Y (cet axe longitudinal peut être rectiligne ou non).

Notons par ailleurs que les tôles conductrices 10, 20 comporte des portions planes, supérieure et inférieure, superposées l'une à l'autre, et au contact l'une de l'autre au niveau du plan de référence P_{ref}. Ainsi, des portions longitudinales externes 11e, 21e s'étendent dans le plan XY entre les nervures longitudinales externes 12e, 22e et la bordure de la plaque bipolaire 1, sur toute la périphérie de celle-ci. De plus, des portions longitudinales internes supérieure 11i et inférieure 21i s'étendent entre les nervures longitudinales internes 12i, 22i et les nervures de distribution.

La plaque bipolaire 1 comporte, dans une zone longitudinale intermédiaire Zᵢₙₜ, une alternance longitudinale entre au moins une première région anti-court-circuit Rₛᵤₚ (dite à plan de contact supérieur Pcₛᵤₚ) et au moins une deuxième région anti-court-circuit R_{inf} (dite à plan de contact inférieur Pc_{inf}). Par alternance longitudinale, on entend que ces première et deuxième régions anti-court-circuit Rₛᵤₚ, R_{inf} se succèdent en alternant suivant l'axe longitudinal Y de la zone longitudinale intermédiaire Zᵢₙₜ. Cette alternance longitudinale de premières régions anti-court-circuit Rₛᵤₚ avec des deuxièmes régions anti-court-circuit R_{inf} peut être périodique ou non.

Dans la première région anti-court-circuit Rₛᵤₚ, le plan de contact entre les deux tôles conductrices 10, 20 est un plan de contact supérieur Pcₛᵤₚ, dans le sens où il est situé au-dessus du plan de référence P_{ref} suivant la direction +Z.

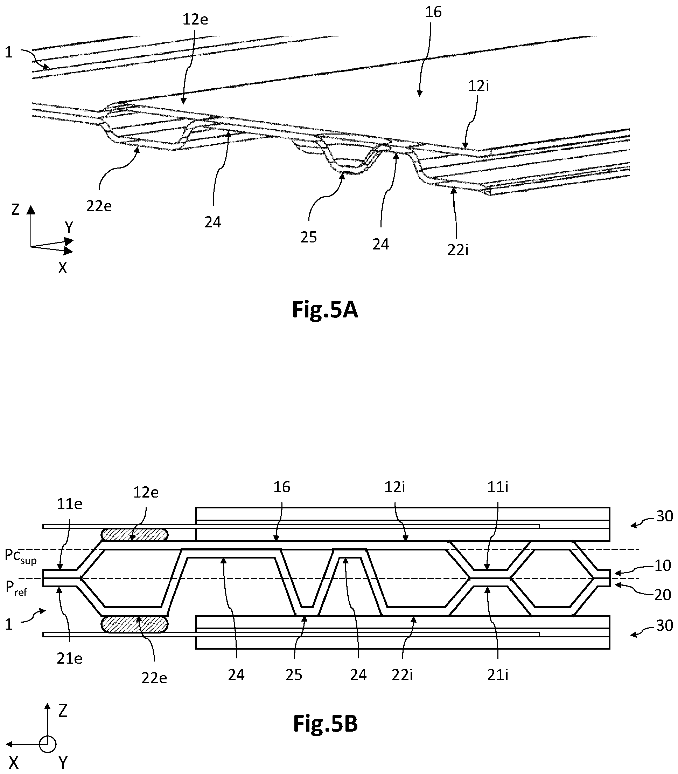

La tôle supérieure 10 présente une nervure longitudinale intermédiaire supérieure 16 s'étendant dans toute la première région anti-court-circuit Rₛᵤₚ, c'est-à-dire sur toute sa surface. Elle s'étend donc sur toute la longueur (suivant l'axe Y) de la première région anti-court-circuit Rₛᵤₚ, et sur toute sa largeur (suivant l'axe Y). Elle raccorde ainsi directement la nervure longitudinale supérieure externe 12e avec la nervure longitudinale supérieure interne 12i, sans qu'il y ait un renfoncement intercalaire. La nervure longitudinale intermédiaire supérieure 16 peut être au contact de l'AME sur au moins une partie de sa largeur (comme l'illustre la fig.5B). Cette nervure longitudinale intermédiaire supérieure 16 s'étend suivant l'axe longitudinal de la zone longitudinale intermédiaire Zᵢₙₜ. De préférence, elle s'étend de manière continûment planaire. Elle peut être coplanaire, ou non, avec la nervure longitudinale supérieure externe 12e et/ou avec la nervure longitudinale supérieure interne 12i.

Par ailleurs, la tôle inférieure 20 présente un renfoncement intermédiaire inférieur 24, superposé et au contact de la nervure longitudinale intermédiaire supérieure 16. Le plan de contact entre la nervure longitudinale intermédiaire supérieure 16 et le renfoncement intermédiaire inférieur 24 correspond au plan de contact supérieur Pcₛᵤₚ. Il est situé au-dessus du plan de référence P_{ref} suivant la direction +Z.

Le contact entre le renfoncement intermédiaire inférieur 24 et la nervure longitudinale intermédiaire supérieure 16 peut être un contact continu, c'est-à-dire que le renfoncement 24 est, sur toute sa surface, au contact avec la nervure 16. En variante, le contact peut être un contact localisé, c'est-à-dire qu'il y a un ou plusieurs points de contact entre le renfoncement 24 et la nervure 16. Hors de ces points de contact, le renfoncement 24 et la nervure 16 sont espacés suivant l'axe Z d'une faible distance, par exemple de l'ordre de quelques dizaines de microns, par exemple au plus 50µm voire moins (suffisamment faible pour éviter l'écoulement du liquide caloporteur). Notons que les plaques bipolaires peuvent présenter un tel contact localisé avant d'appliquer la force de serrage à l'empilement (*stack*), puis un contact continu après l'application de cette force.

Selon l'invention, la tôle inférieure 20, dans la région anti-court-circuit Rₛᵤₚ, comporte une pluralité de plots inférieurs 25, faisant saillie, suivant une direction -Z opposée à la tôle supérieure 10, vis-à-vis du renfoncement intermédiaire inférieur 24 dans lesquels ils sont situés. Ils présentent des dimensions sensiblement égales suivant deux axes orthogonaux quelconques dans un plan parallèle à la plaque bipolaire 1.

D'une manière générale, un plot se distingue d'une nervure dans le sens où il présente des dimensions sensiblement égales suivant deux axes orthogonaux quelconques dans le plan XY. Les plots peuvent ainsi présenter une base sensiblement circulaire (comme ici) ou carrée, qui n'est donc pas allongée ou oblongue. Ils présentent une base située au niveau du renfoncement et un sommet. Le sommet peut être courbe ou aplati (méplat). Ils présentent une hauteur (distance entre la base et le sommet suivant l'axe Z) qui correspond de préférence à la profondeur du renfoncement. Ainsi, le sommet est de préférence sensiblement coplanaire avec les nervures longitudinales interne et/ou externe de la tôle conductrice. Toutefois, la hauteur des plots peut être égale à au moins 50%, et de préférence à au moins 75% de la profondeur du renfoncement.

Les plots inférieurs 25 s'étendent à partir du renfoncement intermédiaire inférieur 24, et ne sont de préférence pas raccordés à la nervure longitudinale inférieure interne 22i ou à la nervure longitudinale inférieure externe 22e. Ils peuvent être disposés suivant l'axe longitudinal Y de manière périodique ou non, sous forme par exemple de plusieurs lignes parallèles. Suivant l'axe X, les plots inférieurs 25 peuvent être alignés ou peuvent être disposés en quinconce, voire être disposés de manière aléatoire.

Les plots inférieurs 25 permettent ici d'assurer une bonne tenue mécanique des tôles conductrices 10, 20, et ici en particulier de la tôle inférieure 20, pour éviter qu'elles ne se déforment dans la zone longitudinale intermédiaire Zᵢₙₜ, ou éviter que l'AME inférieur ne se déforme en direction du renfoncement intermédiaire inférieur 24. Ils permettent également d'assurer un bon contact mécanique entre la plaque bipolaire et les AME inférieur et supérieur.

Par ailleurs, la tôle inférieure 20, dans la région anti-court-circuit Rₛᵤₚ, ne comporte pas de nervure transversale s'étendant dans la zone longitudinale intermédiaire Zᵢₙₜ en joignant les nervures longitudinales inférieures interne 22i et externe 22e. Cet axe transversal peut être l'axe X lui-même ou un axe incliné par rapport à l'axe X. En effet, de telles nervures transversales peuvent autoriser un écoulement de court-circuit du liquide caloporteur, qui rejoindrait la ligne d'étanchéité externe et contournerait ainsi la zone réactionnelle. Aussi, on comprend que le renfoncement intermédiaire inférieur 24 est un unique renfoncement qui s'étend continument sur toute la largeur et la longueur de la région anti court-circuit Rₛᵤₚ en entourant chacun des plots inférieurs 25 dans le plan XY.

Ainsi, dans la région anti-court-circuit Rₛᵤₚ à plan de contact supérieur Pcₛᵤₚ, la section droite d'écoulement d'air, au niveau de la tôle supérieure 10 (cathodique), est fortement réduite par la présence de la nervure longitudinale intermédiaire supérieure 16, ce qui limite l'écoulement de court-circuit de l'air (augmentation de la perte de charge linéaire). De plus, les tôles conductrices 10, 20 présentent une bonne tenue mécanique grâce aux plots inférieurs 25, ce qui empêche leur déformation ainsi que celle de l'AME inférieur. Enfin, l'écoulement de court-circuit du liquide caloporteur est limité ou absent, dans la mesure où il n'y pas de nervures transversales inférieures raccordant la nervure longitudinale interne 22i à la nervure longitudinale externe 22e. Ainsi, le liquide caloporteur ne peut s'y écouler et ne peut donc pas la zone réactionnelle.

Par ailleurs, dans la deuxième région anti-court-circuit R_{inf}, le plan de contact entre les deux tôles conductrices 10, 20 est un plan de contact inférieur Pc_{inf}, dans le sens où il est situé en dessous du plan de référence P_{ref} suivant la direction -Z.

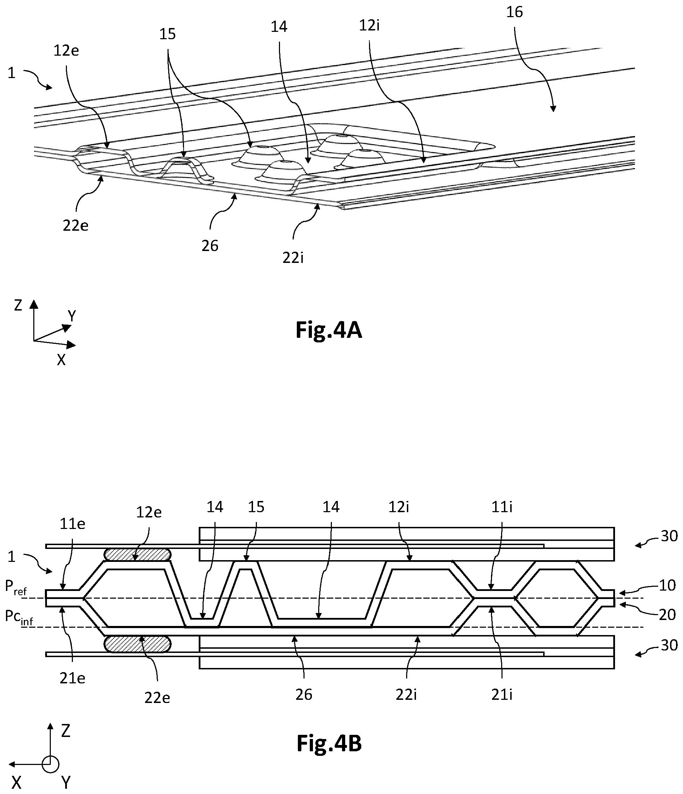

La tôle inférieure 20 présente une nervure longitudinale intermédiaire inférieure 26 s'étendant dans toute la région anti-court-circuit R_{inf}, c'est-à-dire sur toute sa surface. Elle s'étend donc sur toute la longueur (suivant l'axe Y) de la région anti-court-circuit R_{inf}, et sur toute sa largeur (suivant l'axe Y). Elle raccorde ainsi directement la nervure longitudinale inférieure externe 22e avec la nervure longitudinale inférieure interne 22i, sans qu'il y ait un renfoncement intercalaire. La nervure longitudinale intermédiaire inférieure 26 peut être au contact de l'AME sur au moins une partie de sa largeur (comme l'illustre la fig.4B). Cette nervure longitudinale intermédiaire inférieure 26 s'étend suivant l'axe longitudinal de la zone longitudinale intermédiaire Zᵢₙₜ. De préférence, elle s'étend de manière continûment planaire. Elle peut être coplanaire, ou non, avec la nervure longitudinale inférieure externe 22e et/ou avec la nervure longitudinale inférieure interne 22i.

Par ailleurs, la tôle supérieure 10 présente un renfoncement intermédiaire supérieur 14, superposé et au contact de la nervure longitudinale intermédiaire inférieure 26. Le plan de contact entre la nervure longitudinale intermédiaire inférieure 26 et le renfoncement intermédiaire supérieur 14 correspond au plan de contact inférieur Pc_{inf}. Il est situé en-dessous du plan de référence P_{ref} suivant la direction -Z. Comme indiqué précédemment pour le renfoncement 24 et la nervure 16, le contact entre le renfoncement intermédiaire supérieur 14 et la nervure longitudinale intermédiaire inférieure 26 peut être continu, c'est-à-dire que le renfoncement 14 est, sur toute sa surface, au contact avec la nervure 26. En variante, le contact peut être localisé, c'est-à-dire qu'il y a un ou plusieurs points de contact entre le renfoncement 14 et la nervure 26. Hors de ces points de contact, le renfoncement 14 et la nervure 26 sont espacés suivant l'axe Z d'une faible distance, par exemple de l'ordre de quelques dizaines de microns, par exemple au plus 50µm voire moins (suffisamment faible pour éviter l'écoulement du liquide caloporteur).

Selon l'invention, la tôle supérieure 10, dans la région anti-court-circuit R_{inf}, comporte une pluralité de plots supérieurs 15, faisant saillie, suivant une direction +Z opposée à la tôle inférieur 20, vis-à-vis du renfoncement intermédiaire supérieur 14 dans lesquels ils sont situés. Ils présentent des dimensions sensiblement égales suivant deux axes orthogonaux quelconques dans un plan parallèle à la plaque bipolaire 1.

Les plots supérieurs 15 s'étendent à partir du renfoncement intermédiaire supérieur 14, et ne sont de préférence pas raccordés à la nervure longitudinale supérieure interne 12i ou à la nervure longitudinale supérieure externe 12e. Ils peuvent être disposés suivant l'axe longitudinal Y de manière périodique ou non, sous forme par exemple de plusieurs lignes parallèles. Suivant l'axe X, les plots supérieurs 15 peuvent être alignés ou peuvent être disposés en quinconce, voire être disposés de manière aléatoire.

Les plots supérieurs 15 permettent ici d'assurer une bonne tenue mécanique des tôles conductrices 10, 20, et ici en particulier de la tôle supérieure 10, pour éviter qu'elles ne se déforment dans la zone longitudinale intermédiaire Zᵢₙₜ, ou éviter que l'AME supérieur ne se déforme en direction du renfoncement intermédiaire supérieur 14. Ils permettent également d'assurer un bon contact mécanique entre la plaque bipolaire et les AME inférieur et supérieur.

Par ailleurs, la tôle supérieure 10, dans la région anti-court-circuit R_{inf}, ne comporte pas de nervure transversale s'étendant dans la zone longitudinale intermédiaire Zᵢₙₜ en joignant les nervures longitudinales supérieures interne 12i et externe 12e. Cet axe transversal peut être l'axe X lui-même ou un axe incliné par rapport à l'axe X. Aussi, on comprend que le renfoncement intermédiaire supérieur 14 est un unique renfoncement qui s'étend continument sur toute la largeur et la longueur de la région anti court-circuit R_{inf} en entourant chacun des plots supérieurs 15 dans le plan XY.

Aussi, dans la région anti-court-circuit R_{inf} à plan de contact inférieur Pc_{inf}, la section droite d'écoulement de l'hydrogène, au niveau de la tôle inférieure 20, est fortement réduite par la nervure longitudinale intermédiaire inférieure 26, ce qui limite l'écoulement de court-circuit de l'hydrogène (augmentation de la perte de charge linéaire). De plus, les tôles conductrices 10, 20 présentent une bonne tenue mécanique grâce aux plots supérieurs 15, ce qui empêche leur déformation ainsi que celle de l'AME supérieur. Enfin, l'écoulement de court-circuit du liquide caloporteur est limité ou absent, dans la mesure où il n'y a pas de nervures transversales supérieures raccordant la nervure longitudinale interne 12i à la nervure longitudinale externe 12e. Ainsi, le liquide caloporteur ne peut s'y écouler ni ainsi contourner en partie la zone réactionnelle.

Par ailleurs, notons ici, comme l'illustre la fig.3B, que la tôle supérieure 10 peut comporter une portion courbe supérieure 17 qui assure la jonction longitudinale (suivant l'axe Y) entre le renfoncement intermédiaire supérieur 14 et la nervure intermédiaire supérieure 16. De même, la tôle inférieure 20 comporte une portion courbe inférieure 27 qui assure la jonction longitudinale entre la nervure intermédiaire inférieure 26 et le renfoncement intermédiaire inférieur 24. Ces portions courbes supérieure 17 et inférieure 27 sont ici décalées suivant l'axe longitudinale Y pour ne pas être au contact l'une de l'autre, évitant ainsi une transmission des contraintes mécaniques susceptibles de fragiliser la plaque bipolaire 1.

La figure 4A est une vue partielle, en perspective et en coupe transversale, de la plaque bipolaire de la fig.3A dans la région anti court-circuit R_{inf} à plan de contact inférieur, et la figure 4B est une vue schématique et partielle, en coupe transversale, de la plaque bipolaire de la fig.4A.

La tôle inférieure 20 présente une nervure longitudinale intermédiaire inférieure 26, qui s'étend continûment suivant l'axe transversal X entre les nervures longitudinales inférieures interne 22i et externe 22e, et qui s'étend suivant l'axe longitudinal Y jusqu'à la région anti court-circuit Rₛᵤₚ. Elle s'étend donc dans toute la région anti court-circuit R_{inf}. Elle vient au contact du côté anodique de l'AME inférieur, ce qui permet de réduire l'écoulement de court-circuit d'hydrogène.

La tôle supérieure 10 présente un renfoncement longitudinal supérieur 14, qui s'étend suivant l'axe transversal X entre les nervures longitudinales supérieures interne 12i et externe 12e, et suivant l'axe longitudinal Y à partir de la région anti-court-circuit R_{inf}. Le renfoncement longitudinal supérieur 14 et la nervure longitudinale inférieure 26 sont au contact l'une de l'autre (contact continu ou localisé) au niveau d'un plan de contact inférieur Pc_{inf} suivant l'axe Z (en-dessous du plan de référence P_{ref}).

La tôle supérieure 10 comporte des plots supérieurs 15, situés dans la zone longitudinale intermédiaire Zᵢₙₜ, et en saillie vis-à-vis du renfoncement intermédiaire supérieur 14 dans lequel ils sont situés. Ils s'étendent à partir de celui-ci suivant la direction +Z, en direction de la cathode de l'AME supérieur avec lequel ils viennent au contact. Il s'agit de plots et non pas de nervures, et présentent donc des dimensions sensiblement égales suivant deux axes orthogonaux quelconques dans le plan XY. Ici, ils présentent une base circulaire, mais une base carrée est également possible. Leur sommet est arrondi (cf. fig.4A), mais un méplat est également possible (comme illustré sur la fig.4B). Ainsi, les plots supérieurs 15 permettent d'éviter une déformation suivant l'axe Z des tôles conductrices, mais également une déformation suivant la direction -Z de l'AME supérieur. Ils permettent d'assurer un bon contact entre les tôles conductrices 10, 20 et les AME supérieur et inférieur.

Ainsi, la tôle supérieure 10 ne comporte pas de nervures transversales s'étendant suivant l'axe transversal X (ou de manière inclinée à l'axe X) en joignant les nervures longitudinales supérieures interne 12i et externe 12e. Ainsi, on évite les risques que le liquide caloporteur ne court-circuite au moins partiellement la zone réactionnelle en traversant la zone longitudinale intermédiaire Zᵢₙₜ pour rejoindre la ligne d'étanchéité externe.

La figure 5A est une vue partielle, en perspective et en coupe transversale, de la plaque bipolaire de la fig.3A dans la région anti court-circuit Rₛᵤₚ à plan de contact supérieur, et la figure 5B est une vue schématique et partielle, en coupe transversale, de la plaque bipolaire de la fig.5A.

La tôle supérieure 10 présente une nervure longitudinale intermédiaire supérieure 16, qui s'étend continûment suivant l'axe transversal X entre les nervures longitudinales supérieures interne 12i et externe 12e, et qui s'étend suivant l'axe longitudinal Y à partir ou jusqu'à la région anti court-circuit R_{inf}. Elle s'étend donc dans toute la région anti court-circuit Rₛᵤₚ. Elle vient au contact du côté cathodique de l'AME supérieur (non représenté), ce qui permet de réduire l'écoulement de court-circuit d'air.

La tôle inférieure 20 présente un renfoncement longitudinal inférieur 24, qui s'étend suivant l'axe transversal X entre les nervures longitudinales inférieures interne 22i et externe 22e, et suivant l'axe longitudinal Y à partir de la région anti-court-circuit R_{inf}. Le renfoncement longitudinal inférieur 24 et la nervure longitudinale intermédiaire supérieure 16 sont au contact l'une de l'autre (contact continu ou localisé) au niveau d'un plan de contact supérieur Pcₛᵤₚ suivant l'axe Z (au-dessus du plan de référence P_{ref}).

La tôle inférieure 20 comporte des plots inférieurs 25, situés dans la zone longitudinale intermédiaire Zᵢₙₜ, et en saillie vis-à-vis du renfoncement intermédiaire inférieur 24 dans lequel ils sont situés. Ils s'étendent à partir de celui-ci suivant la direction -Z, en direction de l'anode de l'AME inférieur avec lequel ils viennent au contact. Il s'agit ici aussi de plots et non pas de nervures, et présentent donc des dimensions sensiblement égales suivant deux axes orthogonaux quelconques dans le plan XY. Ici, ils présentent également une base circulaire, mais une base carrée est également possible. Leur sommet est arrondi (cf. fig.5A), mais un méplat est également possible (cf. fig.5B). Ainsi, les plots inférieurs 25 permettent d'éviter une déformation suivant la direction -Z des tôles conductrices, mais également une déformation suivant la direction +Z de l'AME supérieur. Ils permettent d'assurer un bon contact entre les tôles conductrices 10, 20 et les AME supérieur et inférieur.

Ainsi, la tôle inférieure 20 ne comporte pas de nervures transversales s'étendant suivant l'axe transversal X (ou de manière inclinée à l'axe X) en joignant les nervures longitudinales inférieures interne et externe. Ainsi, on évite les risques que le liquide caloporteur ne court-circuite au moins partiellement la zone réactionnelle en traversant la zone longitudinale intermédiaire Zᵢₙₜ pour rejoindre la ligne d'étanchéité externe.

Enfin, le fait qu'il y ait une succession longitudinale d'au moins une région anti court-circuit Rₛᵤₚ et d'au moins une région anti court-circuit R_{inf} permet de limiter à la fois les risques d'écoulement de court-circuit d'air côté cathodique et d'hydrogène côté anodique.

Des modes de réalisation particuliers viennent d'être décrits. Différentes variantes et modifications apparaîtront à l'homme du métier.

## Revendications

1. Plaque bipolaire (1) de cellule électrochimique, comportant :
∘ des tôles supérieure (10) et inférieure (20), superposées l'une à l'autre, comportant :
• des circuits de distribution supérieur et inférieur, superposés l'un à l'autre, adaptés à amener des fluides réactifs respectivement jusqu'à des électrodes supérieure et inférieure ;
• des nervures longitudinales internes supérieure (12i) et inférieure (22i), superposées l'une à l'autre, formant respectivement une bordure longitudinale des circuits de distribution supérieur et inférieur ;
• des nervures longitudinales externes supérieure (12e) et inférieure (22e), superposées l'une à l'autre, s'étendant le long des nervures longitudinales internes (12i, 22i), délimitant latéralement, avec ces dernières, une zone longitudinale intermédiaire (Zᵢₙₜ) ;
∘ dans la zone longitudinale intermédiaire (Zᵢₙₜ) se trouve une alternance longitudinale entre au moins une première région anti-court-circuit (Rₛᵤₚ) et au moins une deuxième région anti-court-circuit (R_{inf}), où :
• dans la première région anti-court-circuit (Rₛᵤₚ) dite à plan de contact supérieur (Pcₛᵤₚ), la tôle supérieure (10) présente une nervure longitudinale intermédiaire supérieure (16) s'étendant dans toute la première région anti-court-circuit (Rₛᵤₚ) ; et la tôle inférieure (20) présente un renfoncement intermédiaire inférieur (24) superposé et au contact de la nervure longitudinale intermédiaire supérieure (16) ;
• dans la deuxième région anti-court-circuit (R_{inf}) dite à plan de contact inférieur (Pc_{inf}), la tôle inférieure (20) présentant une nervure longitudinale intermédiaire inférieure (26), s'étendant dans toute la deuxième région anti-court-circuit (R_{inf}) ; et la tôle supérieure (10) présente un renfoncement intermédiaire supérieur (14), superposé et au contact de la nervure longitudinale intermédiaire inférieure (26) ;
∘ **caractérisée en ce que** :
• dans la première région anti-court-circuit (Rₛᵤₚ), la tôle inférieure (20) présente :
▪ une pluralité de plots inférieurs (25), faisant saillie, suivant une direction opposée à la tôle supérieure (10), vis-à-vis du renfoncement intermédiaire inférieur (24) dans lesquels ils sont situés, et présentant des dimensions sensiblement égales suivant deux axes orthogonaux quelconques dans un plan parallèle à la plaque bipolaire ;
▪ une absence de nervures transversales s'étendant dans la zone longitudinale intermédiaire (Zᵢₙₜ) en joignant les nervures longitudinales inférieures interne (22i) et externe (22e) ; et
• dans la deuxième région anti-court-circuit (R_{inf}), la tôle supérieure (10) présente :
▪ une pluralité de plots supérieurs (15), faisant saillie, suivant une direction opposée à la tôle inférieure (20), vis-à-vis du renfoncement intermédiaire supérieur (14) dans lesquels ils sont situés, et présentant des dimensions sensiblement égales suivant deux axes orthogonaux quelconques dans un plan parallèle à la plaque bipolaire ; et
▪ une absence de nervures transversales s'étendant dans la zone longitudinale intermédiaire (Zᵢₙₜ) en joignant les nervures longitudinales supérieures interne (12i) et externe (12e).

2. Plaque bipolaire (1) selon la revendication 1, comportant plusieurs premières régions anti-court-circuit (Rₛᵤₚ) agencées en alternance longitudinale avec plusieurs deuxièmes régions anti-court-circuit (R_{inf}).

3. Plaque bipolaire (1) selon la revendication 1 ou 2, dans laquelle les plots supérieurs (15) sont agencés longitudinalement de manière périodique, et les plots inférieurs (25) sont agencés longitudinalement de manière périodique.

4. Plaque bipolaire (1) selon l'une quelconque des revendications 1 à 3, dans laquelle les plots supérieurs (15) et inférieurs (25) sont répartis sur au moins deux lignes parallèles à un axe longitudinal de la zone longitudinale intermédiaire (Zᵢₙₜ).

5. Plaque bipolaire (1) selon l'une quelconque des revendications 1 à 4, dans laquelle les plots supérieurs (15) et inférieurs (25) présentent une hauteur sensiblement égale, respectivement, à celle des nervures longitudinales internes supérieure (12i) et inférieure (22i).

6. Plaque bipolaire (1) selon l'une quelconque des revendications 1 à 5, dans laquelle les plots supérieurs (15) et inférieurs (25) présentent une base circulaire ou carrée.

7. Plaque bipolaire (1) selon l'une quelconque des revendications 1 à 5, dans laquelle les plots supérieurs (15) et inférieurs (25) sont distincts respectivement, des nervures longitudinales internes supérieure (12i) et inférieure (22i), et, respectivement, des nervures longitudinales externes supérieure (12e) et inférieure (22e).

8. Plaque bipolaire (1) selon l'une quelconque des revendications 1 à 8, dans laquelle les nervures longitudinales externes supérieure (12e) et inférieure (22e) sont au contact chacune d'un joint d'étanchéité (5).

9. Cellule électrochimique, comportant au moins la plaque bipolaire (1) selon l'une quelconque des revendications précédentes, et des assemblages membrane / électrodes (30), l'un au contact de la tôle supérieure (10) et l'autre au contact de la tôle inférieure (20).

10. Cellule électrochimique selon la revendication 9, dans lequel un assemblage membrane / électrode supérieur est au contact des plots supérieurs (15), et un assemblage membrane / électrode inférieur est au contact des plots inférieurs (25).

11. Réacteur électrochimique, comportant au moins une cellule électrochimique selon la revendication 9 ou 10.

## Patentansprüche

1. Bipolarplatte (1) einer elektrochemischen Zelle, die Folgendes aufweist:
∘ obere (10) und untere (20) Bleche, die übereinander liegen, die Folgendes aufweisen:
• obere und untere Verteilerkreise, die übereinander liegen und dazu ausgelegt sind, reaktive Fluide zu den oberen bzw. unteren Elektroden zu führen;
• obere (12i) und untere (22i) innere Längsrippen, die übereinander liegen und jeweils eine Längskante der oberen und unteren Verteilerkreise bilden;
• obere (12e) und untere (22e) äußere Längsrippen, die übereinander liegen, die sich entlang der inneren Längsrippen (12i, 22i) erstrecken und mit diesen seitlich einen mittleren Längsbereich (Zᵢₙₜ) begrenzen;
∘ im mittleren Längsbereich (Zᵢₙₜ) befindet sich ein Längswechsel zwischen mindestens einer ersten Kurzschlussschutzregion (Rₛᵤₚ) und mindestens einer zweiten Kurzschlussschutzregion (Rᵢₙₜ), wobei:
• in der ersten Kurzschlussschutzregion (Rₛᵤₚ), die als obere Kontaktfläche (Pcₛᵤₚ) bezeichnet wird, weist das obere Blech (10) eine obere mittlere Längsrippe (16) auf, die sich über die gesamte erste Kurzschlussschutzregion (Rₛᵤₚ) erstreckt; und das untere Blech (20) weist eine untere mittlere Vertiefung (24) auf, die über der oberen mittleren Längsrippe (16) liegt und in Verbindung mit dieser steht;
• in der zweiten Kurzschlussschutzregion (R_{inf}), die als untere Kontaktfläche (Pc_{inf}) bezeichnet wird, weist das untere Blech (20) eine untere mittlere Längsrippe (26) auf, die sich über die gesamte zweite Kurzschlussschutzregion (R_{inf}) erstreckt; und das obere Blech (10) weist eine obere mittlere Vertiefung (14) auf, die über der unteren mittleren Längsrippe (26) liegt und in Verbindung mit dieser steht;
∘ **dadurch gekennzeichnet, dass**:
• das untere Blech (20) in der ersten Kurzschlussschutzregion (Rₛᵤₚ) Folgendes aufweist:
▪ eine Vielzahl von oberen Stiften (25), die in einer Richtung gegenüber dem oberen Blech (10) gegenüber der unteren mittleren Vertiefung (24), in der sie sich befinden, hervorstehen und im Wesentlichen gleiche Abmessungen entlang zweier beliebiger orthogonaler Achsen in einer Ebene parallel zu der Bipolarplatte aufweisen;
▪ ein Fehlen von Querrippen, die sich im mittleren Längsbereich (Zᵢₙₜ) erstrecken, indem sie die inneren (22i) und äußeren unteren Längsrippen (22e) verbinden; und
• das obere Blech (10) in der zweiten Kurzschlussschutzregion (R_{inf}) Folgendes aufweist:
▪ eine Vielzahl von oberen Stiften (15), die in einer Richtung gegenüber dem unteren Blech (20) gegenüber der oberen mittleren Vertiefung (14), in der sie sich befinden, hervorstehen und im Wesentlichen gleiche Abmessungen entlang zweier beliebiger orthogonaler Achsen in einer Ebene parallel zur Bipolarplatte aufweisen; und
▪ ein Fehlen von Querrippen, die sich im mittleren Längsbereich (Zᵢₙₜ) erstrecken, indem sie die oberen inneren (12i) und äußeren (12e) Längsrippen verbinden.

2. Bipolarplatte (1) nach Anspruch 1, die mehrere erste Kurzschlussschutzregionen (Rₛᵤₚ) aufweist, die in Längsrichtung abwechselnd mit mehreren zweiten Kurzschlussschutzregionen (R_{inf}) angeordnet sind.

3. Bipolarplatte (1) nach Anspruch 1 oder 2, wobei die oberen Stifte (15) periodisch längs angeordnet sind und die unteren Stifte (25) periodisch längs angeordnet sind.

4. Bipolarplatte (1) nach einem der Ansprüche 1 bis 3, wobei die oberen (15) und unteren (25) Stifte auf mindestens zwei Linien parallel zu einer Längsachse des mittleren Längsbereichs (Zᵢₙₜ) verteilt sind.

5. Bipolarplatte (1) nach einem der Ansprüche 1 bis 4, wobei die oberen (15) und unteren (25) Stifte eine Höhe aufweisen, die im Wesentlichen gleich der Höhe jeweils der oberen (12i) und unteren (22i) inneren Längsrippen ist.

6. Bipolarplatte (1) nach einem der Ansprüche 1 bis 5, wobei die oberen (15) und unteren (25) Stifte eine kreisförmige oder quadratische Basis aufweisen.

7. Bipolarplatte (1) nach einem der Ansprüche 1 bis 5, wobei sich die oberen (15) und unteren (25) Stifte jeweils von den oberen (12i) und unteren (22i) inneren Längsrippen und von den oberen (12e) und unteren (22e) äußeren Längsrippen unterscheiden.

8. Bipolarplatte (1) nach einem der Ansprüche 1 bis 8, wobei die oberen (12e) und unteren (22e) äußeren Längsrippen jeweils eine Dichtung (5) berühren.

9. Elektrochemische Zelle, die mindestens die Bipolarplatte (1) nach einem der vorhergehenden Ansprüche und Membran-/Elektrodenbaugruppen (30) aufweist, wobei eine in Verbindung mit dem oberen Blech (10) steht und die andere in Verbindung mit dem unteren Blech (20) steht.

10. Elektrochemische Zelle nach Anspruch 9, wobei eine obere Membran-/Elektrodenbaugruppe die oberen Stifte (15) berührt und eine untere Membran-/Elektrodenbaugruppe die unteren Stifte (25) berührt.

11. Elektrochemischer Reaktor, der mindestens eine elektrochemische Zelle nach Anspruch 9 oder 10 aufweist.

## Claims

1. An electrochemical cell bipolar plate (1), comprising:
∘ upper (10) and lower (20) metal sheets, superimposed on one another, comprising:
• upper and lower distribution circuits, superimposed on one another, adapted to bring reactive fluids respectively to upper and lower electrodes;
• upper (12i) and lower (22i) inner longitudinal ribs, superimposed on each other, forming a longitudinal border of the upper and lower distribution circuits, respectively;
• upper (12e) and lower (22e) outer longitudinal ribs, superimposed on each other, extending along the inner longitudinal ribs (12i, 22i), laterally delimiting, with the same, an intermediate longitudinal zone (Zᵢₙₜ);
∘ in the intermediate longitudinal zone (Zᵢₙₜ) there is a longitudinal alternation between at least one first anti-short-circuit region (Rₛᵤₚ) and at least one second anti-short-circuit region (Rᵢₙₜ), wherein:
• in the first anti-short circuit region (Rₛᵤₚ) with a so-called upper contact plane (Pcₛᵤₚ), the upper metal sheet (10) has an upper intermediate longitudinal rib (16) extending throughout the first anti-short circuit region (Rₛᵤₚ); and the lower metal sheet (20) has a lower intermediate recess (24) superimposed and in contact with the upper intermediate longitudinal rib (16);
• in the second anti-short circuit region (R_{inf}) with a so-called lower contact plane (Pc_{inf}), the lower metal sheet (20) having a lower intermediate longitudinal rib (26), extending throughout the second anti-short circuit region (R_{inf}); and the upper metal sheet (10) has an upper intermediate recess (14), superimposed and in contact with the lower intermediate longitudinal rib (26);
∘ **characterised in that**:
• in the first anti-short circuit region (Rₛᵤₚ), the lower metal sheet (20) has:
▪ a plurality of lower pads (25), projecting, along a direction opposite to the upper metal sheet (10), with respect to the lower intermediate recess (24) in which they are located, and having substantially equal dimensions along any two orthogonal axes in a plane parallel to the bipolar plate;
▪ an absence of transverse ribs extending in the intermediate longitudinal zone (Zᵢₙₜ) by joining the inner (22i) and outer (22e) lower longitudinal ribs; and
• in the second anti-short circuit region (R_{inf}), the upper metal sheet (10) has:
▪ a plurality of upper pads (15), projecting, in a direction opposite to the lower metal sheet (20), with respect to the upper intermediate recess (14) in which they are located, and having substantially equal dimensions along any two orthogonal axes in a plane parallel to the bipolar plate; and
▪ an absence of transverse ribs extending in the intermediate longitudinal zone (Zᵢₙₜ) by joining the inner (12i) and outer (12e) upper longitudinal ribs.

2. The bipolar plate (1) according to claim 1, comprising several first anti-short circuit regions (Rₛᵤₚ) arranged in longitudinal alternation with several second anti-short circuit regions (R_{inf}).

3. The bipolar plate (1) according to claim 1 or 2, wherein the upper pads (15) are arranged longitudinally periodically, and the lower pads (25) are arranged longitudinally periodically.

4. The bipolar plate (1) according to any one of claims 1 to 3, wherein the upper (15) and lower (25) pads are distributed over at least two lines parallel to a longitudinal axis of the intermediate longitudinal zone (Zᵢₙₜ).

5. The bipolar plate (1) according to any one of claims 1 to 4, wherein the upper (15) and lower (25) pads have a height substantially equal, respectively, to that of the upper (12i) and lower (22i) inner longitudinal ribs.

6. The bipolar plate (1) according to any one of claims 1 to 5, wherein the upper (15) and lower (25) pads have a circular or square base.

7. The bipolar plate (1) according to any one of claims 1 to 5, wherein the upper (15) and lower (25) pads are distinct, respectively, from the upper (12i) and lower (22i) inner longitudinal ribs, and, respectively, from the upper (12e) and lower (22e) outer longitudinal ribs.

8. The bipolar plate (1) according to any one of claims 1 to 8, wherein the upper (12e) and lower (22e) outer longitudinal ribs are each in contact with a seal (5).

9. An electrochemical cell, comprising at least the bipolar plate (1) according to any one of the preceding claims, and membrane/electrode assemblies (30), one in contact with the upper metal sheet (10) and the other in contact with the lower metal sheet (20).

10. The electrochemical cell according to claim 9, wherein an upper membrane/electrode assembly is in contact with the upper pads (15), and a lower membrane/electrode assembly is in contact with the lower pads (25).

11. An electrochemical reactor, comprising at least one electrochemical cell according to claim 9 or 10.
